# EUROPEAN PATENT APPLICATION

(11) **EP 4 842 124 A1**
(43) Date of publication of application: **18.11.2026**
(21) Application number: 25747924.6
(22) Date of filing: 26.01.2025
(51) Int. Cl.: H04W 72/40, H04W 4/80

(54) **BLUETOOTH COMMUNICATION SCHEDULING METHOD AND APPARATUS, BLUETOOTH DEVICE, AND CHIP**

(30) Priority: 30.01.2024 CN 202410134710
(71) Applicant: Huawei Technologies Co., Ltd., Shenzhen, Guangdong 518129 (CN)
(72) Inventor: YANG, Yang, Shenzhen, Guangdong 518129 (CN); LIANG, Jiaxin, Shenzhen, Guangdong 518129 (CN)
(74) Representative: Huawei European IPR
(86) International application number: PCT/CN2025/075100
(87) International publication number: WO 2025/162356

(57) **Abstract**

A Bluetooth communication scheduling method is provided, and includes: obtaining first status information on a first communication link, where the first status information includes link status information and/or a data sending completion delay, and the first communication link is a communication link between a first Bluetooth device and any second Bluetooth device; and adjusting, based on the first status information, a quantity of controller buffers in the first Bluetooth device that are available to the first communication link. In this way, because status information of a communication link may reflect quality of the communication link, and a quantity of controller buffers available to the communication link directly affects a quantity of data packets that can be buffered for transmission on the communication link, this controller buffer allocation manner can ensure that more resources are allocated to a communication link with good link quality, thereby improving utilization of Bluetooth link resources and enabling better allocation and usage of overall Bluetooth link resources.

## Description

This application claims priority to Chinese Patent Application No. 202410134710.7, filed with the China National Intellectual Property Administration on January 30, 2024 and entitled "BLUETOOTH COMMUNICATION SCHEDULING METHOD AND APPARATUS, BLUETOOTH DEVICE, AND CHIP", which is incorporated herein by reference in its entirety.

### TECHNICAL FIELD

This application relates to the field of information technology (information technology, IT), and in particular, to a Bluetooth communication scheduling method and apparatus, a Bluetooth device, and a chip.

### BACKGROUND

With popularization of intelligent devices and an increase in Bluetooth peripherals, usage scenarios in which mobile phones, tablet computers, or notebook computers serve as centers and Bluetooth serves as a communication channel have emerged. In these scenarios, central devices such as mobile phones, tablet computers, or notebook computers each establish Bluetooth transmission channels with at least two Bluetooth devices. Therefore, there is a requirement for multi-connection concurrent transmission in these scenarios.

In a related technology, in a Bluetooth communication scenario of such multi-connection concurrent transmission, a transmission priority may be determined based on a service priority. A connection with a higher priority is then preferentially scheduled, and connections with a same priority are scheduled in a round-robin manner, to complete data transmission between Bluetooth devices. Such a scheduling method is effective in scenarios with good Bluetooth connection link quality or a clear service priority. However, when a Bluetooth link is congested due to an increase in Bluetooth devices or when quality of a Bluetooth link degrades due to an increased distance between devices, transmission on a poor-quality link occupies a large quantity of resources for a long period of time, and consequently, a connection with good link quality cannot be guaranteed, thereby reducing overall Bluetooth transmission efficiency. Therefore, how to improve Bluetooth transmission efficiency in a multi-connection concurrent transmission scenario is an urgent technical problem to be resolved currently.

### SUMMARY

This application provides a Bluetooth communication scheduling method and apparatus, a Bluetooth device, a chip, a computer storage medium, and a computer product, to improve Bluetooth transmission efficiency in a multi-connection concurrent transmission scenario.

According to a first aspect, this application provides a Bluetooth communication scheduling method, applied to a first Bluetooth device. The first Bluetooth device establishes communication connections with at least two second Bluetooth devices. The method includes: obtaining first status information on a first communication link, where the first status information includes link status information and/or a data sending completion delay, and the first communication link is a communication link between the first Bluetooth device and any second Bluetooth device; and adjusting, based on the first status information, a quantity of controller buffers (controller buffer) in the first Bluetooth device that are available to the first communication link.

In this way, because status information of a communication link may well reflect quality of the communication link, and a quantity of controller buffers available to the communication link directly affects a quantity of data packets that can be buffered for transmission on the communication link, this controller buffer allocation manner can ensure that more resources are allocated to a communication link with good link quality, thereby improving utilization of Bluetooth link resources and better allocating and using the entire Bluetooth link resources.

In a possible implementation, a protocol stack of the first Bluetooth device includes a logical link control and adaptation protocol (L2CAP) and a controller (controller), the first status information includes the link status information, and the first status information is recorded in the controller. In this case, obtaining the first status information on the first communication link includes: The L2CAP obtains the link status information from the controller. In this way, a single end evaluates quality of a communication link without cooperation between two ends. This avoids additionally occupying Bluetooth resources, and further improves utilization of Bluetooth link resources.

In a possible implementation, the link status information includes one or more of a received signal strength indicator (RSSI), a retransmission rate, and a packet loss rate.

In a possible implementation, the protocol stack of the first Bluetooth device includes the logical link control and adaptation protocol (L2CAP) and the controller (controller), and the first status information includes the data sending completion delay. In this case, obtaining the first status information on the first communication link includes: The L2CAP records a first moment at which the controller feeds back completion of sending of a first data packet, where the first data packet is sent by the controller through the first communication link; and the L2CAP calculates the data sending completion delay based on the first moment and a second moment, where the second moment is a moment at which the L2CAP sends the first data packet to the controller. In this way, a single end evaluates quality of a communication link without cooperation between two ends. This avoids additionally occupying Bluetooth resources, and further improves utilization of Bluetooth link resources.

In a possible implementation, that the L2CAP calculates the data sending completion delay based on the first moment and the second moment includes: The L2CAP calculates a first delay based on the first moment and the second moment; and the L2CAP corrects the first delay based on a historical data sending completion delay on the first communication link, to obtain the data sending completion delay. In this way, the first delay can be corrected based on historical data, thereby improving statistical accuracy.

In a possible implementation, adjusting, based on the first status information, the quantity of controller buffers in the first Bluetooth device that are available to the first communication link includes: obtaining, based on the first status information, a service priority, and a controller buffer allocation table, quantities of controller buffers available to the first communication link at different service priorities; and adjusting the quantities of controller buffers available to the first communication link at the different service priorities. In this way, a quantity of controller buffers available to a communication link at different service priorities can be adjusted.

In a possible implementation, after adjusting, based on the first status information, the quantity of controller buffers in the first Bluetooth device that are available to the first communication link, the method further includes: when the first communication link needs to be used to send data, using the first communication link to send data, and increasing a quantity of used controller buffers by one each time one data packet is sent; and when the quantity of used controller buffers is equal to the quantity of controller buffers available to the first communication link, stopping using the first communication link to send data. In this way, resources used by the communication link is controlled.

According to a second aspect, this application provides a Bluetooth communication scheduling apparatus, deployed in a first Bluetooth device, where the first Bluetooth device establishes communication connections with at least two second Bluetooth devices. The apparatus includes an obtaining module and a processing module. The obtaining module is configured to obtain first status information on a first communication link, where the first status information includes link status information and/or a data sending completion delay, and the first communication link is a communication link between the first Bluetooth device and any second Bluetooth device. The processing module is configured to adjust, based on the first status information, a quantity of controller buffers (controller buffer) in the first Bluetooth device that are available to the first communication link.

In a possible implementation, the first status information includes link status information. In this case, when obtaining the first status information on the first communication link, the obtaining module is specifically configured to obtain the link status information from a controller (controller) in a protocol stack of the first Bluetooth device, where the first status information is recorded in the controller.

In a possible implementation, the link status information includes one or more of a received signal strength indicator (RSSI), a retransmission rate, and a packet loss rate.

In a possible implementation, the first status information includes the data sending completion delay. In this case, when obtaining the first status information on the first communication link, the obtaining module is specifically configured to: record a first moment at which the controller (controller) in the protocol stack of the first Bluetooth device feeds back completion of sending of a first data packet, where the first data packet is sent by the controller through the first communication link; and calculate the data sending completion delay based on the first moment and a second moment, where the second moment is a moment at which the obtaining module sends the first data packet to the controller.

In a possible implementation, when calculating the data sending completion delay based on the first moment and the second moment, the obtaining module is specifically configured to: calculate a first delay based on the first moment and the second moment; and correct the first delay based on a historical data sending completion delay on the first communication link, to obtain the data sending completion delay.

In a possible implementation, when adjusting, based on the first status information, the quantity of controller buffers in the first Bluetooth device that are available to the first communication link, the processing module is specifically configured to: obtain, based on the first status information, a service priority, and a controller buffer allocation table, quantities of controller buffers available to the first communication link at different service priorities; and adjust the quantities of controller buffers available to the first communication link at the different service priorities.

In a possible implementation, after adjusting, based on the first status information, the quantity of controller buffers in the first Bluetooth device that are available to the first communication link, the processing module is further configured to: when the first communication link needs to be used to send data, use the first communication link to send data, and increase a quantity of used controller buffers by one each time one data packet is sent; and when the quantity of used controller buffers is equal to the quantity of controller buffers available to the first communication link, stop using the first communication link to send data.

According to a third aspect, this application provides a Bluetooth device, including: one or more processors; and a memory, configured to store one or more programs, where when the one or more programs are executed by the one or more processors, the one or more processors are enabled to implement the method according to any one of the first aspect or the possible implementations of the first aspect.

According to a fourth aspect, this application provides a chip, including at least one processor and an interface circuit. The at least one processor obtains program instructions or data through the interface circuit. The at least one processor is configured to execute the program instructions, to implement the method according to any one of the first aspect or the possible implementations of the first aspect.

According to a fifth aspect, this application provides a computer-readable storage medium, including computer program instructions. When the computer program instructions are executed by an electronic device, the electronic device is enabled to perform the method according to any one of the first aspect or the possible implementations of the first aspect.

According to a sixth aspect, this application provides a computer program product including instructions. When the instructions are run by an electronic device, the electronic device is enabled to perform the method according to any one of the first aspect or the possible implementations of the first aspect.

It may be understood that, for beneficial effects of the second aspect to the sixth aspect, refer to related descriptions in the first aspect. Details are not described herein again.

### BRIEF DESCRIPTION OF DRAWINGS

FIG. 1 is a diagram of a Bluetooth communication scenario according to an embodiment of this application;
FIG. 2 is a diagram of a hardware structure of a Bluetooth device according to an embodiment of this application;
FIG. 3 is a diagram of an architecture of a Bluetooth protocol stack according to an embodiment of this application;
FIG. 4 is a diagram of a communication process between Bluetooth devices according to an embodiment of this application;
FIG. 5 is a diagram of data exchange between an L2CAP and a controller during communication between Bluetooth devices according to an embodiment of this application;
FIG. 6 is a diagram of a process of transmitting data based on a service priority in a round-robin scheduling manner according to an embodiment of this application;
FIG. 7 is a schematic flowchart of a Bluetooth communication scheduling method according to an embodiment of this application;
FIG. 8 is a diagram of a structure of a Bluetooth communication scheduling apparatus according to an embodiment of this application; and
FIG. 9 is a diagram of a structure of a chip according to an embodiment of this application.

### DESCRIPTION OF EMBODIMENTS

The term "and/or" in this specification describes an association relationship between associated objects and represents that three relationships may exist. For example, A and/or B may represent the following three cases: Only A exists, both A and B exist, and only B exists. The character "/" in this specification indicates an "or" relationship between the associated objects. For example, A/B indicates A or B.

In the specification and claims of this specification, the terms "first", "second", and the like are intended to distinguish between different objects, but do not indicate a particular order of the objects. For example, a first response message, a second response message, and the like are used to distinguish between different response messages, but do not indicate a particular order of the response messages.

In addition, in embodiments of this application, words such as "example" or "for example" are used to represent giving an example, an illustration, or a description. Any embodiment or design scheme described as an "example" or "for example" in embodiments of this application should not be explained as being more preferred or having more advantages than another embodiment or design scheme. To be precise, use of the words such as "example" or "for example" is intended to present a relative concept in a specific manner.

In descriptions of embodiments of this application, unless otherwise specified, "a plurality of" means two or more. For example, a plurality of processing units mean two or more processing units, and a plurality of elements mean two or more elements.

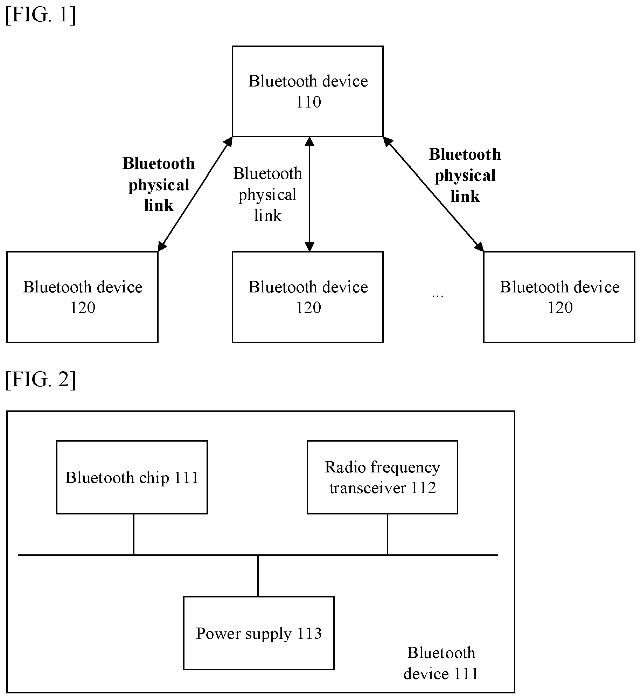

For example, FIG. 1 is a diagram of a Bluetooth communication scenario according to an embodiment of this application. As shown in FIG. 1, in the Bluetooth communication scenario, one Bluetooth device 110 and at least two Bluetooth devices 120 may be included. A communication connection may be established between the Bluetooth device 110 and the Bluetooth device 120 via Bluetooth. For example, the Bluetooth device 110 may be understood as a central device. The Bluetooth device 110 establishes a Bluetooth communication connection to each Bluetooth device 120, and may transmit data, instructions, or the like to each Bluetooth device 120. Certainly, each Bluetooth device 120 may also transmit data, instructions, or the like to the Bluetooth device 110.

It may be understood that both the Bluetooth device 110 and the Bluetooth device 120 are electronic devices that support a Bluetooth communication technology, for example, a mobile phone, a smartwatch, a Bluetooth headset, a Bluetooth keyboard, a Bluetooth mouse, a stylus, a tablet computer, a notebook computer, an ultra-mobile personal computer (ultra-mobile personal computer, UMPC), a netbook, an augmented reality (augmented reality, AR) device, a virtual reality (virtual reality, VR) device, an artificial intelligence (artificial intelligence, AI) device, a wearable device, a vehicle-mounted device, a smart home device, and/or a smart city device. Specific types of the Bluetooth device 110 and the Bluetooth device 120 are not specifically limited in this embodiment of this application.

For example, FIG. 2 is a diagram of a hardware structure of a Bluetooth device according to an embodiment of this application. As shown in FIG. 2, a Bluetooth device 110 may include a Bluetooth chip 111, a radio frequency transceiver 112, and a power supply 113. The Bluetooth chip 111, the radio frequency transceiver 112, and the power supply 113 may be connected to each other through, but not limited to, a bus. The Bluetooth chip 111 is mainly responsible for processing all layers of a Bluetooth protocol stack and implementing various functions (for example, data transmission, voice communication, and control communication) of the Bluetooth device 110. The radio frequency transceiver 112 is mainly responsible for sending and receiving a radio frequency signal, to implement wireless communication between Bluetooth devices. The radio frequency transceiver 112 may convert a digital signal into a radio frequency signal for sending, and receive a radio frequency signal transmitted by another Bluetooth device and convert the radio frequency signal into a digital signal. The Bluetooth device 111 and the radio frequency transceiver 112 may be separately arranged, or may be integrated together. This may be specifically determined based on an actual situation, and is not limited herein. The power supply 113 is mainly responsible for providing electric energy for the Bluetooth chip 111 and the radio frequency transceiver 112. It may be understood that the structure shown in this embodiment of this application does not constitute a specific limitation on the Bluetooth device 110. In some other embodiments of this application, the Bluetooth device 110 may include more or fewer components than those shown in the figure, or combine some components, or split some components, or have different component arrangements. The components shown in the figure may be implemented by hardware, software, or a combination of software and hardware. In addition, for a hardware structure of the Bluetooth device 120, refer to the hardware structure of the Bluetooth device 110. Details are not described herein again.

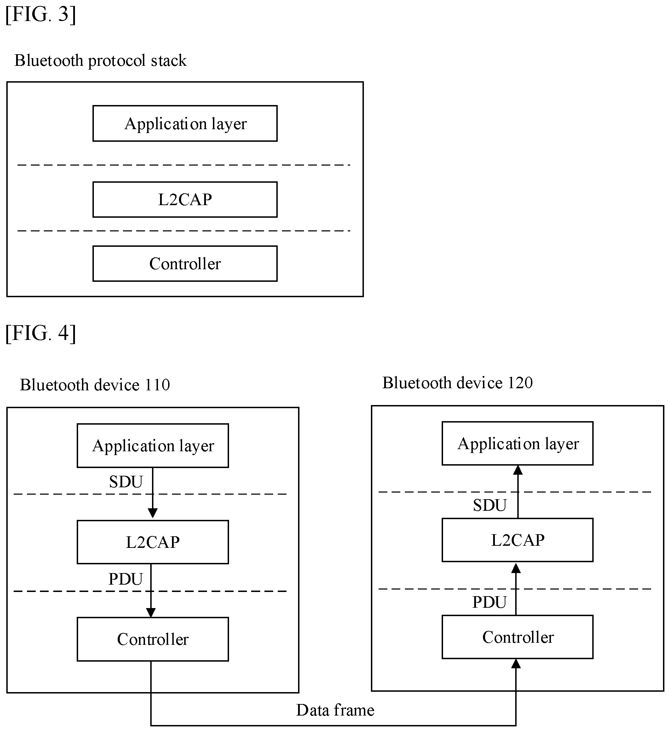

The Bluetooth device 110 and the Bluetooth device 120 each may have a Bluetooth protocol stack, to implement communication between Bluetooth devices. For example, FIG. 3 is a diagram of an architecture of a Bluetooth protocol stack according to an embodiment of this application. As shown in FIG. 3, the Bluetooth protocol stack may include an application layer, a logical link control and adaptation protocol (logical link control and adaptation protocol, L2CAP), and a controller (controller).

The application layer is a highest layer of the Bluetooth protocol stack, and may be responsible for interaction with an application program. The application layer may provide various services, for example, file transfer, audio transfer, and data exchange, to meet requirements of the application program.

The L2CAP is an intermediate layer of the Bluetooth protocol stack, and may be responsible for providing a logical link control function. The L2CAP may encapsulate data at the application layer into a PDU, and then send the PDU to the controller. In addition, the L2CAP may be further responsible for functions such as data traffic control and error detection. When two Bluetooth devices establish a connection, the two Bluetooth devices negotiate to establish at least one L2CAP channel. A communication link between the two Bluetooth devices may be associated with the at least one L2CAP channel. Each L2CAP channel is configured to transmit different data types or services. For example, one L2CAP channel may be configured to transmit audio data, and another L2CAP channel may be configured to transmit control data. The L2CAP channel is a logical link provided by the L2CAP. Each L2CAP channel has a unique channel identifier (channel identifier, CID). The application layer may transmit data to the L2CAP through the L2CAP channel. For example, when audio data needs to be transmitted, the application layer may transmit the data to the L2CAP through an L2CAP channel used to transmit the audio data.

The controller is a lowest layer of the Bluetooth protocol stack, and may be responsible for interaction with Bluetooth hardware. The controller may convert the PDU transferred by the L2CAP into a physical layer data frame, and then send the physical layer data frame to another Bluetooth device. In addition, the controller is also responsible for receiving a physical layer data frame from another Bluetooth device, converting the physical layer data frame into a PDU, and transferring the PDU to the L2CAP. It may be understood that the architecture of the Bluetooth protocol stack shown in this embodiment of this application does not constitute a specific limitation on the Bluetooth protocol stack of the Bluetooth device 110 or the Bluetooth device 120. In some other embodiments of this application, the Bluetooth protocol stack of the Bluetooth device 110 or the Bluetooth device 120 may include more or fewer layers or protocols than those shown in the figure. For example, the Bluetooth protocol stack may include a Bluetooth module (Bluetooth module, BTM), a service discovery protocol (service discovery protocol, SDP), a logical link control and adaptation protocol (logical link control and adaptation protocol, L2CAP), or a radio frequency communication (radio frequency communication, RFCOMM) protocol, and/or include a host controller interface (host controller interface, HCI).

In the architecture of the Bluetooth protocol stack shown in FIG. 3, a communication process between the Bluetooth device 110 and the Bluetooth device 120 may be shown in FIG. 4. As shown in FIG. 4, when the Bluetooth device 110 transfers data to the Bluetooth device 120, the application layer in the Bluetooth device 110 may encapsulate the data into a service data unit (service data unit, SDU), and transfer the service data unit to the L2CAP in the Bluetooth device 110 through an L2CAP channel matching a type of data in the SDU. Then, the L2CAP in the Bluetooth device 110 may learn, based on an association relationship between the L2CAP channel and the communication link, that data needs to be sent to the Bluetooth device 120. Then, the L2CAP in the Bluetooth device 110 may encapsulate the SDU into a protocol data unit (protocol data unit, PDU), add a CID of a corresponding L2CAP channel to the PDU, and transfer the PDU to the controller in the Bluetooth device 110 through the HCI. Finally, the controller in the Bluetooth device 110 may convert the PDU into a data frame, and transfer the data frame to the Bluetooth device 120. After receiving the data frame sent by the controller in the Bluetooth device 110, the controller in the Bluetooth device 120 may convert the data frame into a PDU, and transfer the PDU to the L2CAP in the Bluetooth device 120 through the HCI. Then, the L2CAP in the Bluetooth device 120 may convert and parse the PDU into the SDU, and may obtain the CID of the L2CAP channel through parsing. Then, the L2CAP in the Bluetooth device 120 may transfer the SDU to the application layer in the Bluetooth device 120 through an L2CAP channel that matches the CID obtained through parsing, for use by an application in the application layer. In addition, after receiving the data frame sent by the controller in the Bluetooth device 110, the controller in the Bluetooth device 120 may further return an acknowledgment (acknowledgment, ACK) message to the controller in the Bluetooth device 110. It should be understood that, for a process in which the Bluetooth device 120 transfers data to the Bluetooth device 110, refer to the process in which the Bluetooth device 110 transfers data to the Bluetooth device 120. Details are not described herein again.

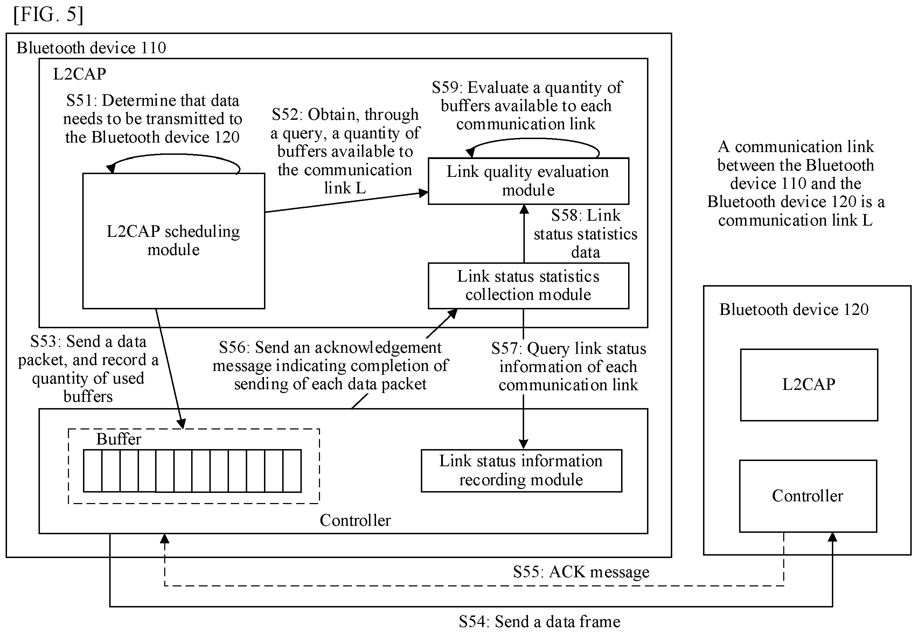

In this embodiment, as shown in FIG. 5, a link status statistics collection module, a link quality evaluation module, and an L2CAP scheduling module may be configured in the L2CAP of the Bluetooth device 110. The link status statistics collection module is mainly responsible for collecting statistics on status information of each communication link. A communication link refers to a physical channel connection between the Bluetooth device 110 and one Bluetooth device 120, and is used to transmit data between the two Bluetooth devices. In addition, the link status statistics collection module may be further responsible for collecting statistics on a sending completion delay of a data packet on each communication link. The link quality evaluation module is mainly responsible for evaluating a quantity of controller buffers available to each communication link based on the status information of a communication link on which statistics are collected by the link status statistics collection module. The L2CAP scheduling module is mainly responsible for: when a communication link needs to be used to transmit data, obtaining, through a query, a quantity of buffers available to the communication link from the link quality evaluation module, and sending data to the controller based on the quantity of buffers available to the communication link, so that the controller transmits data through the communication link.

Still refer to FIG. 5. A specific quantity of buffers (buffer) may be configured in the controller of the Bluetooth device 110, and communication data between Bluetooth devices may be stored and managed by using the buffer (also referred to as "controller buffer"). The controller buffer may store data to be sent to another Bluetooth device, or may store data received from another Bluetooth device. In addition, a link status information recording module may be further configured in the controller. The link status information recording module is mainly responsible for recording status information of each communication link, for example, a received signal strength indicator (received signal strength indicator, RSSI), a retransmission rate, and a packet loss rate. For example, an RSSI of a communication link between the Bluetooth device 110 and the Bluetooth device 120 may be transmitted by the Bluetooth device 120 to the Bluetooth device 110 when the Bluetooth device 120 serves as a receiving end, or may be calculated by the Bluetooth device 110 when the Bluetooth device 110 serves as a receiving end. This may be specifically determined based on an actual situation, and is not limited herein. In addition, the controller in the Bluetooth device 110 may also record a moment at which data is sent on each communication link, a moment at which another device returns an ACK message indicating completion of data receiving, and the like. In some embodiments, for modules, components, or the like configured in the L2CAP and the controller of the Bluetooth device 120, refer to, but not limited to, configurations in the Bluetooth device 110. Details are not described herein again.

For ease of understanding content described in FIG. 5, the following describes data transmission between the Bluetooth device 110 and the Bluetooth device 120 with reference to FIG. 5 by using an example in which the communication link between the Bluetooth device 110 and the Bluetooth device 120 is a communication link L.

For example, still refer to FIG. 5. In S51, after receiving data transferred by an application layer, the L2CAP scheduling module in the Bluetooth device 110 may determine, based on an association relationship between an L2CAP channel used by the application layer to transfer the data and the communication link, that the data needs to be transmitted to the Bluetooth device 120. In addition, a type of a service corresponding to the data may also be determined. For example, when the used L2CAP channel is used to transmit audio data, the service corresponding to the data is an audio service.

In S52, the L2CAP scheduling module in the Bluetooth device 110 may query, from the link quality evaluation module, a quantity of controller buffers available to the communication link L between the Bluetooth device 110 and the Bluetooth device 120.

In S53, the L2CAP scheduling module in the Bluetooth device 110 sends a data packet to the controller in the Bluetooth device 110 based on the quantity of controller buffers available to the communication link L, and increases a quantity of used controller buffers by one each time one data packet is sent. When the quantity of controller buffers available to the communication link L is less than or equal to the quantity of controller buffers that have been used by the communication link L, or no data packet is to be sent, the L2CAP scheduling module may stop sending data to the controller.

In S54, after receiving the data packet sent by the L2CAP scheduling module, the controller in the Bluetooth device 110 may convert the data packet into a physical layer data frame, and send the data frame to the Bluetooth device 120.

In S55, after receiving the data frame sent by the Bluetooth device 110, the controller in the Bluetooth device 120 may return an ACK message to the Bluetooth device 110.

In S56, after sending of each data packet in the controller in the Bluetooth device 110 is completed, the controller may send a completion acknowledgment message to the link status statistics collection module in the Bluetooth device 110, to notify the L2CAP that sending of the data packet has been completed.

In S57, the link statistics collection module in the Bluetooth device 110 obtains link status information of each communication link from the controller, and collects statistics on a sending moment and a sending completion moment (that is, a moment at which a data packet sending completion acknowledgment message is received) of each data packet on each communication link, to obtain a sending completion delay of each data packet. For any data packet, a sending completion delay of the data packet may be an absolute value (that is, |*T*₁ - *T*₂|) of a difference between a moment *T*₁ at which the L2CAP scheduling module sends the data packet to the controller and a moment *T*₂ at which the controller feeds back completion of sending of the data packet. In some embodiments, because time for communication between the L2CAP and the controller is basically the same in both directions, a sending completion delay of a data packet may alternatively be an absolute value (that is, |*T*₃ - *T*₄|) of a difference between a moment *T*₃ at which the controller sends the data packet and a moment *T*₄ at which the controller receives an ACK message for acknowledging that the data packet has been received. In this case, the controller may actively collect statistics on the sending completion delay, and transfer the sending completion delay to the link statistics collection module. Certainly, the link statistics collection module may alternatively actively collect statistics on the sending completion delay. This may be specifically determined based on an actual situation, and is not limited herein.

In S58, the link quality evaluation module in the Bluetooth device 110 obtains link status statistics data of each communication link from the link statistics collection module, for example, link status information and a sending completion delay of each data packet on each communication link.

In S59, the link quality evaluation module in the Bluetooth device 110 evaluates, based on the link status statistics data of each communication link, a quantity of controller buffers available to each communication link. The link quality evaluation module may evaluate quality of each communication link based on the link status information of each communication link. For example, when an RSSI of a communication link is lower than a preset RSSI threshold, it may be determined that a signal of the communication link is poor, that is, quality is poor. When an RSSI of a communication link is higher than a preset RSSI threshold, it may be determined that a signal of the communication link is good, that is, quality is good. In addition, when the link status information includes a plurality of parameters, quality of the communication link may be determined based on each parameter, and then worst quality is selected from the quality as the quality of the communication link. For example, when the link status information includes the RSSI and the retransmission rate, if it is determined, based on the RSSI, that the quality of the communication link is good, but it is determined, based on the retransmission rate, that the quality of the communication link is poor, the communication link is considered as having poor quality. Certainly, weighted averaging may alternatively be performed on determining results, and a result is used as final quality of the communication link.

In addition, when a plurality of data packets are sent on a communication link, statistics on sending completion delays of the plurality of data packets may be collected, and a statistical result is used as a data packet sending completion delay on the communication link. In some embodiments, a historical data packet sending completion delay on the communication link and a current sending completion delay may alternatively be combined, for example, through weighted summation, to obtain a data packet sending completion delay on the communication link. In this way, statistics accuracy is improved.

After the link quality of the communication link and the data packet sending completion delay on the communication link are obtained, a quantity of controller buffers available to the communication link may be obtained based on a service priority (for example, a language call service has a high priority, a hardware control service has a medium priority, and a file transfer service has a low priority) and a preconfigured controller buffer allocation table. For example, if the preconfigured controller buffer allocation table is as shown in Table 1, when link quality of the communication link L is "poor", a service priority is "high", and a sending completion delay is "300 ms", a quantity of controller buffers available to the communication link L is 5. If the link quality of the communication link L is "medium", the service priority is "low", and the sending completion delay is "40 ms", the quantity of controller buffers available to the communication link L is 7. It should be understood that, in Table 1, when communication quality of a communication link is poor, a data packet sending completion delay on the communication link is necessarily poor as well. Therefore, in this case, further division from a perspective of delay may be omitted. Certainly, such division may alternatively be performed. This may be specifically determined based on an actual situation, and is not limited herein.

**Table 1**

| Communication link quality | Service priority | Sending completion delay | Quantity of available controller buffers |
|---|---|---|---|
| Poor | High | - | 5 |
| | Low | - | 1 |
| Medium/Good | High | (0, 50] | 7 |
| | | (50, 100] | 6 |
| | | (100, ∞) | 5 |
| | Low | (0, 50] | 7 |
| | | (50, 100] | 5 |
| | | (100, 200] | 3 |
| | | (200, ∞) | 1 |

It should be understood that in the foregoing description, a quantity of controller buffers available to the communication link is determined in two dimensions: communication link quality and a sending completion delay. In some other instances, a dimension (for example, a communication link quality dimension or a sending completion delay dimension) may be selected from the dimensions to determine the quantity of controller buffers available to the communication link. In this case, items in the controller buffer allocation table may also be modified adaptively. This may be specifically determined based on an actual situation, and is not limited herein.

It should be understood that the link quality evaluation module in the Bluetooth device 110 may evaluate, in real time or periodically, a quantity of controller buffers available to each communication link. In this way, it can be ensured that more resources can be allocated to a communication link with good link quality, thereby improving utilization of Bluetooth link resources, and better allocating and using the entire Bluetooth link resources. In addition, a single end can complete evaluation of link quality without cooperation between two ends. This avoids additionally occupying Bluetooth resources. In a Bluetooth standard, the L2CAP does not have a receiving end feedback mechanism. Therefore, if two ends cooperate, a proprietary protocol needs to be implemented above the L2CAP. In this case, an additional protocol is required for implementation, and deployment difficulty is large. Therefore, the manner of evaluating link quality by a single end provided in this embodiment can reduce complexity of link quality evaluation.

FIG. 5 is described above by using an example in which the Bluetooth device 110 sends data to one Bluetooth device 120. Because the Bluetooth device 110 establishes communication connections with a plurality of Bluetooth devices 120, in a data sending process, the Bluetooth device 110 may select, based on an absolute service priority in a round-robin scheduling manner, a communication link to send data, to improve Bluetooth transmission efficiency. The following describes this scheduling manner.

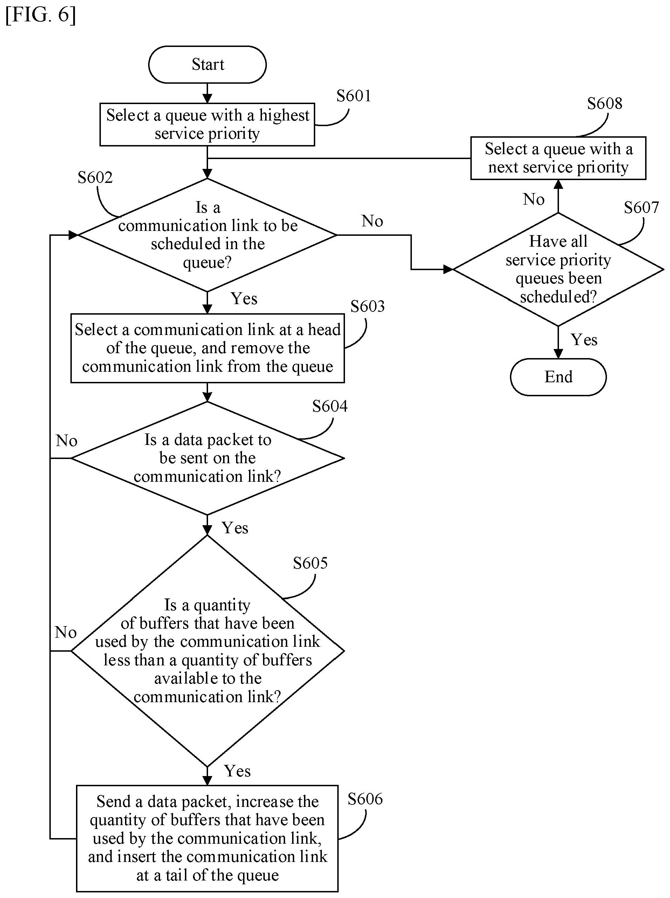

For example, FIG. 6 is a diagram of a process of transmitting data based on a service priority in a round-robin scheduling manner according to an embodiment of this application. The process may but not limited to being completed in an L2CAP in the Bluetooth device 110, for example, completed by an L2CAP scheduling module. For ease of description, the following provides descriptions in which an example in which the process is completed by the L2CAP. As shown in FIG. 6, the manner of transmitting data based on a service priority in a round-robin scheduling manner may include the following steps.

S601: The L2CAP selects a queue with a highest service priority. Each service priority may form a queue. For example, when the service priority is classified into high, medium, and low, there are three service priority queues. During scheduling, the L2CAP may first select a queue with a highest service priority. For example, after receiving a data packet sent by an upper-layer application layer, the L2CAP may store the data packet in a buffer of the L2CAP, and learn, through an L2CAP channel that transmits the data packet, a service type corresponding to the data packet and a communication link that needs to be used. The L2CAP adds the communication link that needs to be used to a corresponding service priority queue based on the service type. For example, when the service type is an audio service, and a priority of the audio service is a highest priority, the L2CAP may add the communication link associated with the service type to the queue with the highest service priority.

S602: The L2CAP determines whether a communication link that needs to be scheduled is in the selected service priority queue. After selecting the service priority queue, the L2CAP may determine whether there is a communication link in the queue. If there is a communication link in the queue, it indicates that there is a schedulable communication link, and therefore, S603 may be performed; or if there is no communication link in the queue, it indicates that there is no schedulable communication link. In this case, the communication link in the service priority queue may be empty, and therefore, S607 may be performed.

S603: The L2CAP selects a communication link at a head of the queue, and removes the communication link from the queue.

S604: The L2CAP determines whether a data packet is to be sent on the communication link. The L2CAP may search a buffer of the L2CAP for a data packet that is related to a service in a current service priority queue and needs to be sent through the communication link. If the data packet can be found, S605 is performed; or if the data packet cannot be found, S602 is performed.

S605: The L2CAP determines whether a quantity of controller buffers that have been used by the communication link is less than a quantity of controller buffers available to the communication link. If the quantity of controller buffers that have been used by the communication link is less than the quantity of controller buffers available to the communication link, S606 is performed; or if the quantity of controller buffers that have been used by the communication link is not less than the quantity of controller buffers available to the communication link, S602 is performed.

S606: The L2CAP sends a data packet to the controller, increases a quantity of buffers that have been used by the communication link, and inserts the communication link at a tail of the queue.

S607: The L2CAP determines whether all service priority queues have been scheduled.

If all service priority queues have been scheduled, the process is ended; or if not all service priority queues have been scheduled, S608 is performed.

S608: The L2CAP selects a queue with a next service priority, and returns to perform S602.

In this way, to-be-sent data in the Bluetooth device is scheduled, and Bluetooth transmission efficiency is improved.

The following describes a Bluetooth communication scheduling method provided in an embodiment of this application.

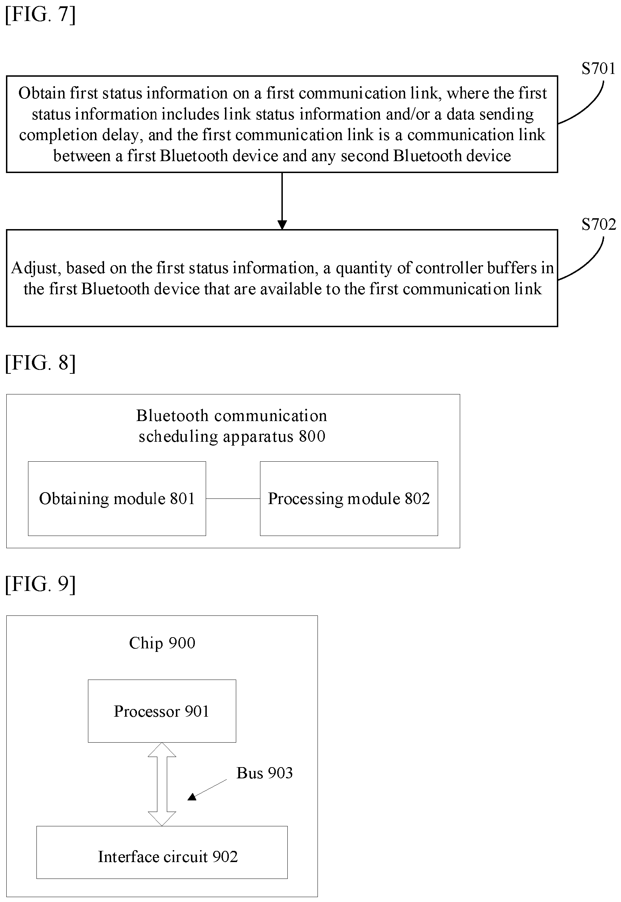

For example, FIG. 7 is a schematic flowchart of a Bluetooth communication scheduling method according to an embodiment of this application. It may be understood that the method may be performed by any apparatus, device, platform, or device cluster having computing and processing capabilities. For example, the method may be applied to a first Bluetooth device, and the first Bluetooth device establishes communication connections with at least two second Bluetooth devices. For ease of description, the following uses an example in which an execution body is the first Bluetooth device for description. A solution in which the first Bluetooth device is replaced with another device, component, or apparatus still falls within the protection scope of this application. For example, the execution body is replaced with an LACP in a protocol stack of the first Bluetooth device. A solution obtained after the replacement still falls within the protection scope of this application. As shown in FIG. 7, the Bluetooth communication scheduling method includes the following steps.

S701: Obtain first status information on a first communication link, where the first status information includes link status information and/or a data sending completion delay, and the first communication link is a communication link between a first Bluetooth device and any second Bluetooth device.

In this embodiment, on the first Bluetooth device, the first Bluetooth device may actively obtain status information of a communication link between the first Bluetooth device and any second Bluetooth device. The status information of each communication link includes link status information and/or a data sending completion delay. The link status may include one or more of an RSSI, a retransmission rate, and a packet loss rate. The data sending completion delay may be an absolute value of a difference between a moment at which the first Bluetooth device sends data to the second Bluetooth device and a moment at which the first Bluetooth device receives an ACK message from the second Bluetooth device, or may be an absolute value of a difference between a moment at which the L2CAP in the protocol stack of the first Bluetooth device sends a data packet to the controller and a moment at which the L2CAP receives data sending completion fed back by the controller.

In a possible implementation, when the first status information is the link status information, the link status information may be recorded in the controller in the protocol stack of the first Bluetooth device. In this case, the first Bluetooth device may obtain the link status information from the controller by using the L2CAP in the protocol stack of the first Bluetooth device.

In another possible implementation, when the first status information is the data sending completion delay, the first Bluetooth device may record, by using the L2CAP in the protocol stack of the first Bluetooth device, a first moment at which the controller feeds back completion of sending of a first data packet. The first data packet is sent by the controller to the second Bluetooth device through the first communication link. Then, the L2CAP in the protocol stack of the first Bluetooth device may calculate the data sending completion delay based on the first moment and a second moment. The second moment is a moment at which the L2CAP sends the first data packet to the controller. In addition, to improve delay calculation accuracy, the L2CAP may calculate a first delay based on the first moment and the second moment, and then correct the first delay based on a historical data sending completion delay on the first communication link, to obtain the data sending completion delay. In this way, smoothing of the delay can be completed.

In still another possible implementation, when the first status information is the link status information and the data sending completion delay, the first Bluetooth device may obtain the link status information and the data sending completion delay by combining the foregoing manners of obtaining the first status information.

S702: Adjust, based on the first status information, a quantity of controller buffers in the first Bluetooth device that are available to the first communication link.

In this embodiment, after the first status information is obtained, the quantity of controller buffers in the first Bluetooth device available to the first communication link may be adjusted based on the first status information, to ensure that more resources can be allocated to a communication link with good link quality, thereby improving utilization of Bluetooth link resources, and better allocating and using the entire Bluetooth link resources. Specifically, quantities of controller buffers available to the first communication link at different service priorities may be first obtained based on the first status information, a service priority, and a controller buffer allocation table. For example, by querying the first status information and the service priority in the controller buffer allocation table, or by separately comparing the first status information and the service priority with conditions in the controller buffer allocation table, the quantities of controller buffers available to the first communication link at the different service priorities can be obtained. After the quantities of controller buffers available to the first communication link at the different service priorities is obtained, the quantities of controller buffers available to the first communication link at the different service priorities may be adjusted. In some embodiments, a quantity of controller buffers in the first Bluetooth device that are available to each communication link may be dynamically adjusted, to ensure that a quantity of controller buffers available to each communication link is obtained through latest evaluation.

In this way, because status information of a communication link may well reflect quality of the communication link, this controller buffer allocation manner can ensure that more resources are allocated to a communication link with good link quality, thereby improving utilization of Bluetooth link resources, and better allocating and using the entire Bluetooth link resources.

Further, after the adjustment of the quantity of controller buffers in the first Bluetooth device that are available to the first communication link is completed, when the first communication link needs to be used to send data, the first communication link may be used to send data, and a quantity of controller buffers that have been used by the first communication link is increased by one each time one data packet is sent. In addition, when the quantity of controller buffers that have been used by the first communication link is equal to the quantity of controller buffers available to the first communication link, it indicates that in this case, the first communication link has used up the resources allocated to the first communication link. Therefore, in this case, using the first communication link to send data may be stopped. In this way, resources used by the communication link is controlled.

It may be understood that sequence numbers of the steps in the foregoing embodiments do not mean an execution order, and the execution order of the processes should be determined based on functions and internal logic of the processes, and should not constitute any limitation on the implementation process of embodiments of this application. In addition, the described embodiments may be combined based on an actual situation, and a combined solution still falls within the protection scope of this application.

The following describes, based on the method in the foregoing embodiment, a Bluetooth communication scheduling apparatus provided in an embodiment of this application.

For example, FIG. 8 is a diagram of a structure of a Bluetooth communication scheduling apparatus according to an embodiment of this application. The Bluetooth communication scheduling apparatus may be deployed in a first Bluetooth device, where the first Bluetooth device establishes communication connections with at least two second Bluetooth device. As shown in FIG. 8, the Bluetooth communication scheduling apparatus 800 includes an obtaining module 801 and a processing module 802. The obtaining module 801 is configured to obtain first status information on a first communication link, where the first status information includes link status information and/or a data sending completion delay, and the first communication link is a communication link between the first Bluetooth device and any second Bluetooth device. The processing module 802 is configured to adjust, based on the first status information, a quantity of controller buffers in the first Bluetooth device that are available to the first communication link. For example, both the obtaining module 801 and the processing module 802 may be but are not limited to modules or units included in an L2CAP in a protocol stack of the first Bluetooth device.

In some embodiments, the first status information includes the link status information. In this case, when obtaining the first status information on the first communication link, the obtaining module 801 is specifically configured to obtain the link status information from a controller in the protocol stack of the first Bluetooth device, where the first status information is recorded in the controller.

In some embodiments, the link status information includes one or more of a received signal strength indicator (RSSI), a retransmission rate, and a packet loss rate.

In some embodiments, the first status information includes the data sending completion delay. In this case, when obtaining the first status information on the first communication link, the obtaining module 801 is specifically configured to: record a first moment at which the controller (controller) in the protocol stack of the first Bluetooth device feeds back completion of sending of a first data packet, where the first data packet is sent by the controller through the first communication link; and calculate the data sending completion delay based on the first moment and a second moment, where the second moment is a moment at which the obtaining module 801 sends the first data packet to the controller.

In some embodiments, when calculating the data sending completion delay based on the first moment and the second moment, the obtaining module 801 is specifically configured to: calculate a first delay based on the first moment and the second moment; and correct the first delay based on a historical data sending completion delay on the first communication link, to obtain the data sending completion delay.

In some embodiments, when adjusting, based on the first status information, the quantity of controller buffers in the first Bluetooth device that are available to the first communication link, the processing module 802 is specifically configured to: obtain, based on the first status information, a service priority, and a controller buffer allocation table, quantities of controller buffers available to the first communication link at different service priorities; and adjust the quantities of controller buffers available to the first communication link at the different service priorities.

In some embodiments, after adjusting, based on the first status information, the quantity of controller buffers in the first Bluetooth device that are available to the first communication link, the processing module 802 is further configured to: when the first communication link needs to be used to send data, use the first communication link to send data, and increase a quantity of used controller buffers by one each time one data packet is sent; and when the quantity of used controller buffers is equal to the quantity of controller buffers available to the first communication link, stop using the first communication link to send data.

It should be understood that the foregoing apparatus is configured to perform the method in the foregoing embodiment. Implementation principles and technical effects of corresponding program modules in the apparatus are similar to those described in the foregoing method. For a working process of the apparatus, refer to the corresponding process in the foregoing method. Details are not described herein again.

Based on the method in the foregoing embodiments, an embodiment of this application provides a Bluetooth device, including one or more processors; and a memory, configured to store one or more programs, where when the one or more programs are executed by the one or more processors, the one or more processors are enabled to perform the method in the foregoing embodiments. For example, the Bluetooth device may be but is not limited to an electronic device such as a mobile phone, a watch, a sound box, or a computer.

According to the method in the foregoing embodiment, an embodiment of this application further provides a chip. FIG. 9 is a diagram of a structure of a chip according to an embodiment of this application. As shown in FIG. 9, the chip 900 includes one or more processors 901 and an interface circuit 902. Optionally, the chip 900 may further include a bus 903. Specifically:
The processor 901 may be an integrated circuit chip and has a signal processing capability. In an implementation process, the steps in the foregoing method may be completed by using an integrated logic circuit of hardware in the processor 901 or instructions in a form of software. The processor 901 may be a general-purpose processor, a digital communicator (DSP), an application-specific integrated circuit (ASIC), a field programmable gate array (FPGA) or another programmable logic device, a discrete gate or a transistor logic device, or a discrete hardware component. The processor 901 may implement or perform the methods and steps that are disclosed in embodiments of this application. The general-purpose processor may be a microprocessor, or the processor may be any conventional processor or the like.

The interface circuit 902 may be configured to send or receive data, instructions, or information. The processor 901 may process data, instructions, or other information received through the interface circuit 902, and send, through the interface circuit 902, information obtained after processing.

Optionally, the chip 900 further includes a memory. The memory may include a read-only memory and a random access memory, and provide operation instructions and data for the processor. A part of the memory may further include a non-volatile random access memory (NVRAM).

Optionally, the memory stores an executable software module or a data structure, and the processor may perform a corresponding operation by invoking operation instructions (the operation instructions may be stored in an operating system) stored in the memory.

Optionally, the interface circuit 902 may be configured to output an execution result of the processor 901.

It should be noted that functions corresponding to each of the processor 901 and the interface circuit 902 may be implemented by using a hardware design, may be implemented by using a software design, or may be implemented by combining software and hardware. This is not limited herein.

It should be understood that steps in the foregoing method embodiment may be implemented by using a logic circuit in a form of hardware or instructions in a form of software in the processor.

Based on the method in the foregoing embodiment, an embodiment of this application provides a computer-readable storage medium, including computer program instructions. When the computer program instructions are executed by an electronic device (for example, the foregoing Bluetooth device), the electronic device is enabled to perform the method described in the foregoing embodiments. For example, the computer-readable storage medium may be any usable medium that can be stored by a compute device, or a data storage device, for example, a data center, including one or more usable media. The usable medium may be a magnetic medium (for example, a floppy disk, a hard disk, or a magnetic tape), an optical medium (for example, a DVD), a semiconductor medium (for example, a solid-state drive), or the like.

Based on the method in the foregoing embodiment, an embodiment of this application provides a computer program product including instructions. When the instructions are run by an electronic device (for example, the foregoing Bluetooth device), the electronic device is enabled to perform the method described in the foregoing embodiment.

It can be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor or the like.

The method steps in embodiments of this application may be implemented in a hardware manner, or may be implemented in a manner of executing software instructions by the processor. The software instructions may include corresponding software modules. The software modules may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium, or may be transmitted by using the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

It may be understood that various numbers in embodiments of this application are merely used for differentiation for ease of description, and are not used to limit the scope of embodiments of this application.

Finally, it should be noted that the foregoing embodiments are merely intended for describing the technical solutions of this application but not for limiting this application. Although this application is described in detail with reference to the foregoing embodiments, a person of ordinary skill in the art should understand that modifications may still be made to the technical solutions described in the foregoing embodiments or equivalent replacements may still be made to some technical features thereof, and such modifications or replacements do not make the essence of the corresponding technical solutions depart from the protection scope of the technical solutions of embodiments of this application.

## Claims

1. A Bluetooth communication scheduling method, applied to a first Bluetooth device,
wherein the first Bluetooth device establishes communication connections with at least two second Bluetooth devices; and
the method comprises:
obtaining first status information on a first communication link, wherein the first status information comprises link status information and/or a data sending completion delay, and the first communication link is a communication link between the first Bluetooth device and any second Bluetooth device; and
adjusting, based on the first status information, a quantity of controller buffers (controller buffer) in the first Bluetooth device that are available to the first communication link.

2. The method according to claim 1, wherein a protocol stack of the first Bluetooth
device comprises a logical link control and adaptation protocol (L2CAP) and a controller (controller), the first status information comprises the link status information, and the first status information is recorded in the controller; and
the obtaining the first status information on the first communication link comprises:
obtaining, by the L2CAP, the link status information from the controller.

3. The method according to claim 2, wherein the link status information comprises one or more of a received signal strength indicator (RSSI), a retransmission rate, and a packet loss rate.

4. The method according to any one of claims 1 to 3, wherein the protocol stack of the
first Bluetooth device comprises the logical link control and adaptation protocol (L2CAP) and the controller (controller), and the first status information comprises the data sending completion delay; and
the obtaining the first status information on the first communication link comprises:
recording, by the L2CAP, a first moment at which the controller feeds back completion of sending of a first data packet, wherein the first data packet is sent by the controller through the first communication link; and
calculating, by the L2CAP, the data sending completion delay based on the first moment and a second moment, wherein the second moment is a moment at which the L2CAP sends the first data packet to the controller.

5. The method according to claim 4, wherein the calculating, by the L2CAP, the data sending completion delay based on the first moment and the second moment comprises:
calculating, by the L2CAP, a first delay based on the first moment and the second moment; and
correcting, by the L2CAP, the first delay based on a historical data sending completion delay on the first communication link, to obtain the data sending completion delay.

6. The method according to any one of claims 1 to 5, wherein the adjusting, based on the first status information, the quantity of controller buffers in the first Bluetooth device that are available to the first communication link comprises:
obtaining, based on the first status information, a service priority, and a controller buffer allocation table, quantities of controller buffers available to the first communication link at different service priorities; and
adjusting the quantities of controller buffers available to the first communication link at the different service priorities.

7. The method according to any one of claims 1 to 6, wherein after adjusting, based on the first status information, the quantity of controller buffers in the first Bluetooth device that are available to the first communication link, the method further comprises:
when the first communication link needs to be used to send data, using the first communication link to send data, and increasing a quantity of used controller buffers by one each time one data packet is sent; and
when the quantity of used controller buffers is equal to the quantity of controller buffers available to the first communication link, stopping using the first communication link to send data.

8. A Bluetooth communication scheduling apparatus, deployed in a first Bluetooth
device, wherein the first Bluetooth device establishes communication connections with at least two second Bluetooth devices; and
the apparatus comprises:
an obtaining module, configured to obtain first status information on a first communication link, wherein the first status information comprises link status information and/or a data sending completion delay, and the first communication link is a communication link between the first Bluetooth device and any second Bluetooth device; and
a processing module, configured to adjust, based on the first status information, a quantity of controller buffers (controller buffer) in the first Bluetooth device that are available to the first communication link.

9. The apparatus according to claim 8, wherein the first status information comprises
the link status information; and
when obtaining the first status information on the first communication link, the obtaining module is specifically configured to:
obtain the link status information from a controller (controller) in a protocol stack of the first Bluetooth device, wherein the first status information is recorded in the controller.

10. The apparatus according to claim 9, wherein the link status information comprises one or more of a received signal strength indicator (RSSI), a retransmission rate, and a packet loss rate.

11. The apparatus according to any one of claims 8 to 10, wherein the first status information comprises the data sending completion delay; and
when obtaining the first status information on the first communication link, the obtaining module is specifically configured to:
record a first moment at which a controller (controller) in a protocol stack of the first Bluetooth device feeds back completion of sending of a first data packet, wherein the first data packet is sent by the controller through the first communication link; and
calculate the data sending completion delay based on the first moment and a second moment, wherein the second moment is a moment at which the obtaining module sends the first data packet to the controller.

12. The apparatus according to claim 11, wherein when calculating the data sending completion delay based on the first moment and the second moment, the obtaining module is specifically configured to:
calculate a first delay based on the first moment and the second moment; and
correct the first delay based on a historical data sending completion delay on the first communication link, to obtain the data sending completion delay.

13. The apparatus according to any one of claims 8 to 12, wherein when adjusting, based on the first status information, the quantity of controller buffers in the first Bluetooth device that are available to the first communication link, the processing module is specifically configured to:
obtain, based on the first status information, a service priority, and a controller buffer allocation table, quantities of controller buffers available to the first communication link at different service priorities; and
adjust the quantities of controller buffers available to the first communication link at the different service priorities.

14. The apparatus according to any one of claims 8 to 13, wherein after adjusting, based on the first status information, the quantity of controller buffers in the first Bluetooth device that are available to the first communication link, the processing module is further configured to:
when the first communication link needs to be used to send data, use the first communication link to send data, and increase a quantity of used controller buffers by one each time one data packet is sent; and
when the quantity of used controller buffers is equal to the quantity of controller buffers available to the first communication link, stop using the first communication link to send data.

15. A Bluetooth device, comprising:
one or more processors; and
a memory, configured to store one or more programs, wherein
when the one or more programs are executed by the one or more processors, the one or more processors are enabled to implement the method according to any one of claims 1 to 7.

16. A chip, comprising at least one processor and an interface circuit, wherein
the at least one processor obtains program instructions or data through the interface circuit; and
the at least one processor is configured to execute the program instructions, to implement the method according to any one of claims 1 to 7.

17. A computer-readable storage medium, comprising computer program instructions, wherein when the instructions are run by an electronic device, the electronic device is enabled to perform the method according to any one of claims 1 to 7.

18. A computer program product comprising instructions, wherein when the instructions are run by an electronic device, the electronic device is enabled to perform the method according to any one of claims 1 to 7.
